# EUROPÄISCHE PATENTSCHRIFT

(11) **EP 2 054 615 B1**
(45) Veröffentlichungstag und Bekanntmachung des Hinweises auf die Patenterteilung: **23.02.2011**
(21) Anmeldenummer: 07787152.3
(22) Anmeldetag: 06.07.2007
(51) Int. Cl.: F02M 61/16, F16L 37/14

(54) **VORRICHTUNG ZUR AXIALEN VERBINDUNG EINES ÄUSSEREN ROHRTEILS MIT EINEM IN DAS ROHRTEIL EINGREIFENDEN KOAXIALEN ZAPFENTEIL ODER INNEREN ROHRTEIL**
DEVICE FOR AXIALLY CONNECTING AN EXTERNAL PIPE SECTION TO A COAXIAL PEG OR AN INTERNAL PIPE SECTION THAT ENGAGES IN SAID SECTION
DISPOSITIF DE CONNEXION AXIALE D'UNE PARTIE DE TUBE EXTÉRIEURE AVEC UNE PARTIE D'AXE OU UNE PARTIE DE TUBE INTÉRIEURE COAXIALE S'ENCASTRANT DANS LA PARTIE DE TUBE

(30) Priorität: 18.08.2006 DE 102006038841
(43) Veröffentlichungstag der Anmeldung: 06.05.2009
(73) Patentinhaber: Robert Bosch GmbH, 70442 Stuttgart (DE)
(72) Erfinder: RAPP, Holger, 71254 Ditzingen (DE)
(86) Internationale Anmeldenummer: PCT/EP2007/056869
(87) Internationale Veröffentlichungsnummer: WO 2008/019912

(56) Entgegenhaltungen:
- EP-A- 0 886 065
- WO-A-00/40857
- DE-C1- 3 601 898
- US-A1- 2004 051 313

## Beschreibung

### Stand der Technik

Die Erfindung bezieht sich auf eine Vorrichtung nach den (gemeinsamen) Oberbegriffen der Patentansprüche 1 und 2.

Bei Injektoren, insbesondere sog. Common-Rail-Injektoren, wird üblicherweise der Kraftstöffrücklauf an einem sog. Ablaufstutzen angeschlossen. Dabei wird ein mit einem O-Ring versehener Rücklaufstecker in die Innenbohrung des Ablaufstutzens eingeführt. Der O-Ring sorgt für die Dichtheit der Verbindung nach außen. Um ein ungewolltes Lösen des Rücklaufsteckers zu vermeiden, ist es bekannt, den Rücklaufstecker oberhalb des O-Rings mittels eines Halteclips zu fixieren. Bei dem Halteclip handelt es sich um einen in einer speziellen Form gebogenen Federdraht, der durch zwei in den Ablaufstutzen gefräste, gegenüberliegende Schlitze geführt wird und soweit in die Innenbohrung eingreift, dass der Rücklaufstecker an einer Durchmesserstufe fixiert und an einer Bewegung aus der Rücklaufbohrung heraus gehindert wird.

Eine Verbindung Injektor-Ablaufstutzen/Rücklaufstecker nach dem vorstehend geschilderten Stand der Technik ist Gegenstand der EP 0 886 065 B1.

Beim Betrieb der in Rede stehenden Injektoren kommt es zu starken Schüttelbeanspruchungen im Bereich der Verbindung Ablaufstutzen/Rücklaufstecker, die dazu führen können, dass der Halteclip innerhalb des ihm zugebilligten Freiraums schnelle Bewegungen ausführt. Durch das hochfrequente Anschlagen des Halteclips an den Begrenzungsflächen der Halteschlitze im Ablaufstutzen kommt es zu Verschleiß an diesen Flächen. Der Verschleiß kann im schlimmsten Fall zur Zerstörung des Ablaufstutzens und zum Verlust der Haltefunktion des Clips führen.

Um die geschilderten Nachteile zu vermeiden, ist ein verschränkter Halteclip entwickelt worden, der sich in den beiden Halteschlitzen des Ablaufstutzens so verkeilt, dass der Halteclip auch bei hoher Schüttelbewegung keine nennenswerten Bewegungen im Ablaufstutzen mehr auszuführen vermag. Allerdings stellt sich auch diese Lösung insofern nachteilig dar, als es sich bei dem erforderlichen Verschränken der Halteclipenden um einen vergleichsweise ungenauen Prozess handelt, der zudem aufwändig ist und dadurch Zusatzkosten verursacht.

Aufgabe der Erfindung ist es, eine spielfreie Verbindung von äußerem Rohrteil, z. B. dem Ablaufstutzen eines Injektors, und innerem Zapfen- bzw. Rohrteil, z. B. dem Rücklaufstecker eines Injektors, sicherzustellen, ohne dass es hierfür einer zeitaufwändigen und/oder ungenauen (plastischen) Verformung des Halteclips bedarf.

### Vorteile der Erfindung

Gemäß der Erfindung wird die Aufgabe bei einer Vorrichtung der eingangs bezeichneten Gattung - alternativ - durch die kennzeichnenden Merkmale der Patentansprüche 1 oder 2 gelöst.

Durch den erfindungsgemäßen Höhenversatz und/oder die windschiefe Zuordnung der einander gegenüberliegenden Halteschlitze im äußeren Rohrteil, z. B. einem Injektor-Ablaufstutzen, kommt es im Montagezustand von äußerem Rohrteil und Zapfen- bzw. innerem Rohrteil (z. B Ablaufstutzen und Rücklaufstecker eines Injektors) zu einer elastischen Verformung und damit Verspannung des - im demontierten Zustand unverschränkt, also eben ausgebildeten - Halteclips, wodurch ein Spiel der beiden verbundenen Konstruktionsteile und damit das Auftreten von Materialschäden an diesen Teilen wirksam vermieden wird.

Vorteilhafte Weiterbildungen der oben angegebenen Grundgedanken der Erfindung können den Patentansprüchen 3 bis 8 entnommen werden.

### Zeichnung

In der Zeichnung sind Ausführungsbeispiele der Erfindung dargestellt, die im Folgenden detailliert beschrieben werden. Im Einzelnen zeigt (jeweils schematisiert):
- Fig. 1: - im vertikalen Längsschnitt (Schnitt I - I in Fig. 2) - eine Ausführungsform einer Verbindung Ablaufstutzen/Rücklaufstecker eines Injektors zur Kraftstoffeinspritzung in Brennräume von Brennkraftmaschinen,
- Fig. 2: einen Schnitt längs der Linie II-II in Fig.1,
- Fig. 3: eine Ausführungsform eines Halteclips, wie er z. B. in der Anordnung nach Fig. 1 und 2 Verwendung findet, in Pfeilrichtung 28 (Fig. 2) betrachtet,
- Fig. 4.: eine Ausführungsform eines Ablaufstutzens (ohne montierten Rücklaufstecker), in Frontansicht,
- Fig. 5: den Ablaufstutzen nach Fig. 4, in Seitenansicht,
- Fig. 6: eine andere Ausführungsform eines Ablaufstutzens, in Frontansicht,
- Fig. 7: den Ablaufstutzen nach Fig. 6, in Seitenansicht,
- Fig. 8: eine weitere Variante eines Ablaufstutzens, in Frontansicht, und
- Fig. 9: den Ablaufstutzen nach Fig. 8, in Seitenansicht.

### Beschreibung der Ausführungsbeispiele

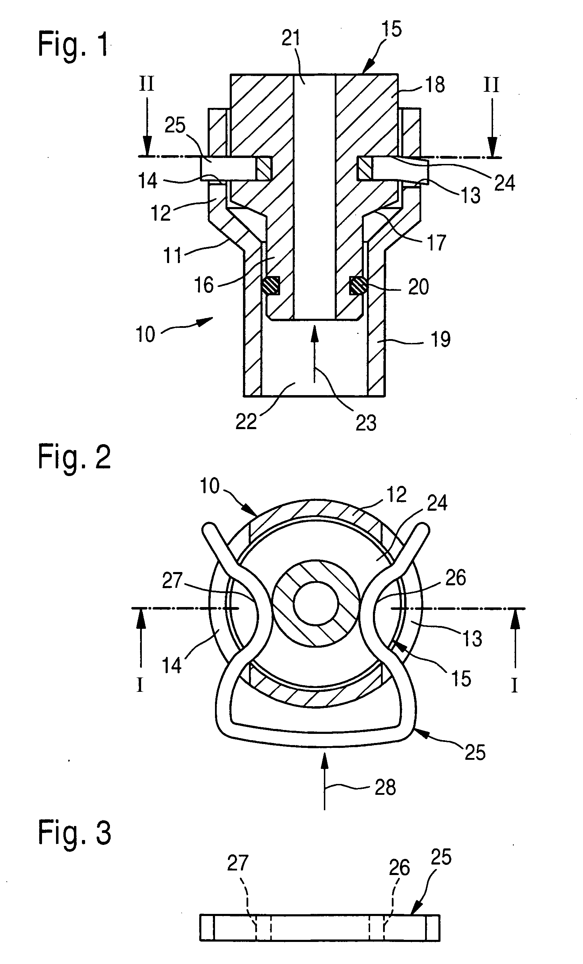

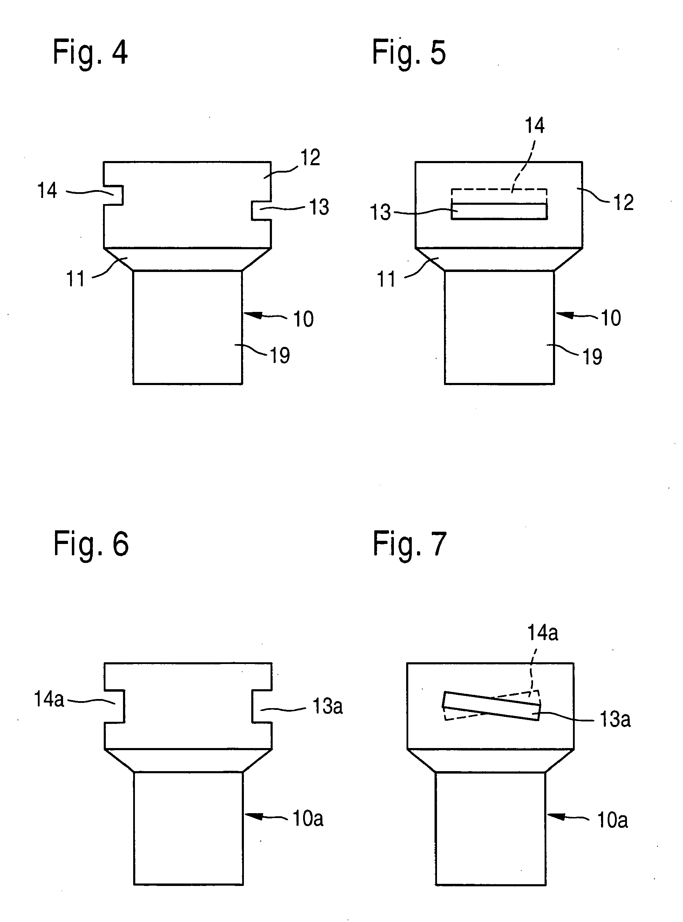

In Fig. 1 und 2 bezeichnet 10 einen hohlzylindrischen Ablaufstutzen eines (in seinen übrigen Bestandteilen nicht gezeigten) Injektors, z. B. Common-Rail-Injektors. Der Ablaufstutzen 10 besitzt aufgrund einer konischen Erweiterung 11 in seinem oberen Bereich 12 einen vergrößerten Durchmesser. An zwei diametral gegenüberliegenden Stellen des Ablaufstutzen-Bereichs 12 sind zwei horizontal ausgerichtete Halteschlitze 13, 14 eingearbeitet, die parallel zueinander liegen, jedoch - in Axialrichtung des Ablaufstutzens 10 - höhenversetzt zueinander angeordnet sind (s. auch Fig. 4 und 5).

Wie weiterhin insbesondere aus Fig. 1 hervorgeht, ist in dem Ablaufstutzen 10 ein insgesamt mit 15 bezifferter zylindrischer Rücklaufstecker montiert. Dieser besitzt einen unteren Bereich 16 kleineren Durchmessers und - über eine konische Erweiterung 17 - einen oberen Bereich 18 größeren Durchmessers. Der Durchmesser des unteren Rücklaufstecker-Bereichs 16 entspricht hierbei dem Innendurchmesser eines unteren Bereichs 19 des Ablaufstutzens 10, während der Durchmesser des oberen Rücklaufstecker-Bereichs 18 zu dem Innendurchmesser des oberen Ablaufstecker-Bereichs 12 korrespondiert. Der Rücklaufstecker 15 ist in der beschriebenen und aus Fig. 1 und 2 ersichtlichen Weise in den Ablaufstutzen 10 eingepasst. An seinem unteren Ende, im Bereich 16, trägt der Rücklaufstecker 15 - in einer Ringnut - einen elastischen Dichtring (sog. O-Ring) 20, mittels dessen er gegen die Innenwandung des Ablaufstutzens 10 abgedichtet ist.

Der Rücklaufstecker 15 besitzt des Weiteren eine durchgehende Axialbohrung 21, die in Montagestellung von Ablaufstutzen 10 und Rücklaufstecker 15 koaxial und konzentrisch zum zylindrischen Innenraum 22 des Ablaufstutzens 10 angeordnet ist. Ein Pfeil 23 kennzeichnet die Strömungsrichtung des aus dem Ablaufstutzen 10 in den Rücklaufstecker 15 übertretenden Kraftstoffs.

Um den Rücklaufstecker 15 in seiner aus Fig. 1 ersichtlichen Montageposition zu fixieren und hierbei insbesondere axiale Relativbewegungen zwischen Rücklaufstecker 15 und Ablaufstutzen 10 zu verhindern, weist der Rücklaufstecker 15 in seinem erweiterten oberen Bereich 18 eine Ringnut 24 auf, in die ein aus Federdraht bestehender Halteclip 25 eingeclipst ist. Fig. 2 macht deutlich, dass der Halteclip 25 bügelartig/symmetrisch geformt ist und zwei radial nach innen abgekröpfte Haltearme 26, 27 besitzt, welche die Halteschlitze 13, 14 des Haltestutzens 10 beidseitig durchsetzen und federnd in die Ringnut 24 des Rücklaufsteckers 15 eingreifen. Die freien Enden der beiden Haltearme 26, 27 sind divergierend gespreizt geformt.

Fig. 3 zeigt, dass der Halteclip 25 im nicht montierten Zustand und in Frontansicht (Pfeil 28 in Fig. 2) betrachtet eine ebene Form aufweist. In Montagestellung (Fig. 1 und 2) dagegen erfährt der Halteclip 25 aufgrund des axialen Höhenversatzes der Halteschlitze 13, 14 im Ablaufstutzen 10 eine Verschränkung bei gleichzeitiger Verspannung. Dies hat den vorteilhaften Effekt zur Folge, dass der Halteclip 25 im Ablaufstutzen 10 spielfrei fixiert ist und somit jegliche axiale Relativbewegungen zwischen Halteclip 25 und Ablaufstutzen 10 vermieden werden. Infolge dessen kann es an den Berührflächen von Halteclip 25 und Halteschlitzen 13, 14 einerseits sowie von Halteclip 25 und Ringnut 24 andererseits nicht zu Verschleiß kommen.

Es ist auch denkbar, anstelle der Ringnut 24 im Rücklaufstecker 15 zwei seitliche parallele Einfräsungen oder Nuten vorzusehen, in die der Halteclip 25 eingreifen könnte. Es wäre auch denkbar, diese Nuten in Axialrichtung (Pfeil 23, Fig. 1) höhenversetzt zueinander anzuordnen, um hierdurch eine Verschränkung und Verspannung des Halteclips 25 zu bewirken.

Bei der Ausführungsform nach Fig. 6 und 7 sind die hier mit 13a und 14a bezifferten Halteschlitze im Ablaufstutzen 10a zwar in Draufsicht (von oben betrachtet) parallel, in Seitenansicht (Fig. 7) jedoch windschief zueinander angeordnet. Auch durch diese alternative Maßnahme lässt sich im Einbauzustand des Rücklaufsteckers 15 (Fig. 1 und 2) eine Verschränkung und Verspannung des - zunächst unverschränkt/ebenen Haltectips 25 (Fig. 1 bis 3) erzielen.

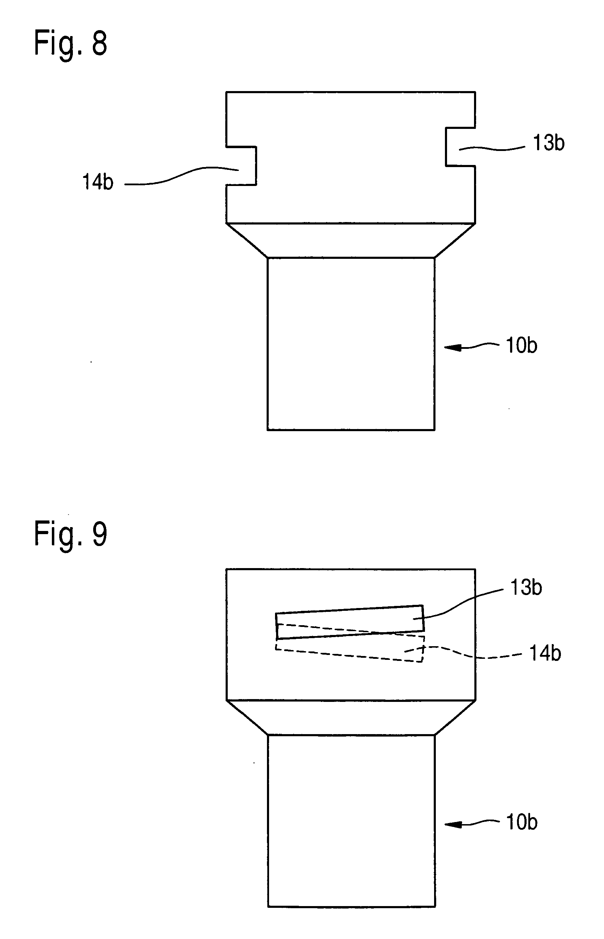

Die Ausführungsform nach Fig. 8 und 9 zeichnet sich dadurch aus, dass die Halteschlitze 13b und 14b im Ablaufstutzen 10b nicht nur - ähnlich wie bei der Variante nach Fig. 6 und 7 - windschief zueinander, sondern auch noch - ähnlich wie bei der Ausführungsform nach Fig. 1 und 2 - in der Höhe axial versetzt angeordnet sind (s. Fig. 8). Hierdurch lässt sich eine noch intensivere Verschränkung und Verspannung des Halteclips 25 (Fig. 1 bis 3) in dessen Montageposition (Fig. 1 und 2) bewirken.

## Patentansprüche

1. Vorrichtung zur axialen Verbindung eines äußeren Rohrteils mit einem in das Rohrteil eingreifenden koaxialen Zapfenteil oder inneren Rohrteils, insbesondere zur Verbindung eines Ablaufstutzens (10) eines Injektors zur Kraftstoffeinspritzung in Brennkraftmaschinen mit einem Kraftstoff-Rücklaufstecker (15), wobei in das äußere Rohrteil zwei einander diametral gegenüberliegende, die Wandung des äußeren Rohrteil durchsetzende Halteschlitze (13, 14) eingearbeitet sind, zu denen Nuten (24) am Umfang des Zapfenteils oder inneren Rohrteils korrespondieren, und wobei zwei einander gegenüberliegende federnde Haltearme (26, 27) eines bügelartigen Halteclips (25) von außen durch die Halteschlitze (13, 14) des äußeren Rohrteils hindurch in die Nuten (24) des Zapfenteils oder inneren Rohrteils federnd einrasten, **dadurch gekennzeichnet, dass** die parallel zueinander liegenden Halteschlitze (13, 14) des äußeren Rohrteils (10) in der Höhe gegeneinander versetzt angeordnet sind, der Halteclip (25) jedoch im nicht montierten Zustand insgesamt eine Ebene bildet.

2. Vorrichtung zur axialen Verbindung eines äußeren Rohrteils mit einem in das Rohrteil eingreifenden koaxialen Zapfenteil oder inneren Rohrteil, insbesondere zur Verbindung eines Ablaufstutzens (10a) eines Injektors zur Kraftstoffeinspritzung in Brennkraftmaschinen mit einem Kraftstoff-Rücklaufstecker (15), wobei in das äußere Rohrteil zwei einander diametral gegenüberliegende, die Wandung des äußeren Rohrteils durchsetzende Halteschlitze (13 a, 13b, 14a, 14b) eingearbeitet sind, zu denen Nuten (24) am Umfang des Zapfenteils oder inneren Rohrteils korrespondieren, und wobei zwei einander gegenüberliegende federnde Haltearme (26, 27) eines bügelartigen Halteclips (25) von außen durch die Halteschlitze (13a, 13b, 14a, 14b) des äußeren Rohrteils hindurch in die Nuten (24) des Zapfenteils oder inneren Rohrteils federnd einrasten, **dadurch gekennzeichnet, dass** die Halteschlitze (13 a, 14a) des Rohrteils (10a) in Axialrichtung betrachtet parallel, in Seitenansicht betrachtet dagegen windschief zueinander angeordnet sind, der Halteclip (25) jedoch im nicht montierten Zustand insgesamt eine Ebene bildet.

3. Vorrichtung nach Anspruch 2, **dadurch gekennzeichnet, dass** die Halteschlitze (13b, 14b) des äußeren Rohrteils (10b) in Axialrichtung betrachtet parallel und in der Höhe aber versetzt gegeneinander angeordnet sind.

4. Vorrichtung nach Anspruch 1, 2 oder 3, **dadurch gekennzeichnet, dass** die federnden Arme (26, 27) des bügelartigen Halteclips (25) in an sich bekannter Weise in eine Ringnut (24) am Umfang des Zapfenteils (15) oder inneren Rohrteils einrasten .

5. Vorrichtung nach Anspruch 1, 2 oder 3, **dadurch gekennzeichnet, dass** in die Außenwandung (18) des Zapfenteils (15) oder inneren Rohrteils zwei dia-metral gegenüberliegende, in der Höhe gegeneinander versetzte parallele Nuten eingearbeitet sind, derart, dass jede Nut mit dem jeweiligen räumlich zugeordneten Halteschlitz (13 bzw. 14) des äußeren Rohrteils (10) korrespondiert.

6. Vorrichtung nach Anspruch 1, 2 oder 3, **dadurch gekennzeichnet, dass** in die Außenwandung (18) des Zapfenteils (15) oder inneren Rohrteils zwei diametral gegenüberliegende, in der Höhe gegeneinander versetzte und zueinander windschiefe, in axialer Draufsicht jedoch parallele Nuten eingearbeitet sind, derart, dass jede Nut mit dem jeweiligen räumlich zugeordneten Halteschlitz (13 bzw. 14) des äußeren Rohrteils (10) korrespondiert.

7. Vorrichtung nach einem oder mehreren der vorstehenden Ansprüche, **dadurch gekennzeichnet, dass** der Halteclip (25) in an sich bekannter Weise einteilig ausgebildet ist und aus gebogenem Federdraht besteht.

8. Vorrichtung nach Anspruch 7, wobei die federnden Haltearme (26, 27) des Halteclips (25) zunächst radial nach innen abgebogen sind und dann wieder divergieren, **dadurch gekennzeichnet, dass** die freien Enden der federnden Haltearme (26, 27) eine nach außen gespreizte Form aufweisen .

## Claims

1. Device for axially connecting an external pipe section to a coaxial peg or an internal pipe section that engages in said pipe section, in particular for connecting a drain connecting piece (10) of an injector for fuel injection in internal combustion engines to a fuel return connector (15), wherein two diametrically opposite retaining slots (13, 14) are incorporated into the external pipe section, said retaining slots passing through the wall of the external pipe section and to which grooves (24) on the circumference of the peg or internal pipe section correspond, and wherein two mutually opposite, resilient retaining arms (26, 27) of a bow-like retaining clip (25) latch resiliently from the outside through the retaining slots (13, 14) of the external pipe section into the grooves (24) of the peg or internal pipe section, **characterized in that** the retaining slots (13, 14), which lie parallel to each other, of the external pipe section (10) are arranged offset in height with respect to each other, but the retaining clip (25) overall forms a plane in the non-fitted state.

2. Device for axially connecting an external pipe section to a coaxial peg or an internal pipe section that engages in said pipe section, in particular for connecting a drain connecting piece (10a) of an injector for fuel injection in internal combustion engines to a fuel return connector (15), wherein two diametrically opposite retaining slots (13a, 13b, 14a, 14b) are incorporated into the external pipe section, said retaining slots passing through the wall of the external pipe section and to which grooves (24) on the circumference of the peg or internal pipe section correspond, and wherein two mutually opposite, resilient retaining arms (26, 27) of a bow-like retaining clip (25) latch resiliently from the outside through the retaining slots (13a, 13b, 14a, 14b) of the external pipe section into the grooves (24) of the peg or internal pipe section, **characterized in that** the retaining slots (13a, 14a) of the pipe section (10a) are arranged parallel, as viewed in the axial direction, but in a skewed manner to each other, as viewed in side view, but the retaining clip (25) overall forms a plane in the non-fitted state.

3. Device according to Claim 2, **characterized in that** the retaining slots (13b, 14b) of the external pipe section (10b) are arranged parallel, as viewed in the axial direction, but offset with respect to each other in height.

4. Device according to Claim 1, 2 or 3, **characterized in that** the resilient arms (26, 27) of the bow-like retaining clip (25) latch in a manner known per se into an annular groove (24) on the circumference of the peg (15) or internal pipe section.

5. Device according to Claim 1, 2 or 3, **characterized in that** two diametrically opposite, parallel grooves which are offset in height with respect to each other are incorporated into the outer wall (18) of the peg (15) or internal pipe section in such a manner that each groove corresponds to the respective, spatially assigned retaining slot (13 or 14) of the external pipe section (10).

6. Device according to Claim 1, 2 or 3, **characterized in that** two diametrically opposite grooves which are offset in height with respect to each other and are skewed with respect to each other, but are parallel in axial top view are incorporated into the outer wall (18) of the peg (15) or internal pipe section in such a manner that each groove corresponds to the respective, spatially assigned retaining slot (13 or 14) of the external pipe section (10).

7. Device according to one or more of the preceding claims, **characterized in that** the retaining clip (25) is designed as a single part in a manner known per se and consists of bent spring wire.

8. Device according to Claim 7, wherein the resilient retaining arms (26, 27) of the retaining clip (25) are initially bent radially inwards and then diverge again, **characterized in that** the free ends of the resilient retaining arms (26, 27) have an outwardly spread shape.

## Revendications

1. Dispositif pour la connexion axiale d'une partie de tube extérieure à une partie d'axe coaxiale ou une partie de tube intérieure venant en prise dans la partie de tube, notamment pour la connexion d'une tubulure d'écoulement (10) d'un injecteur pour l'injection de carburant dans des chambres de combustion avec un connecteur de retour de carburant (15), deux fentes de retenue (13, 14) diamétralement opposées et traversant la paroi de la partie de tube extérieure étant pratiquées dans la partie de tube extérieure, auxquelles correspondent des rainure (24) sur la périphérie de la partie d'axe ou de la partie de tube intérieure, et deux bras de retenue élastiques (26, 27) opposés l'un à l'autre d'une pince de retenue (25) en forme d'étrier s'encliquetant élastiquement depuis l'extérieur à travers les fentes de retenue (13, 14) de la partie de tube extérieure dans les rainures (24) de la partie d'axe ou de la partie de tube intérieure, **caractérisé en ce que** les fentes de retenue (13, 14) disposées parallèlement l'une à l'autre de la partie de tube extérieure (10) sont disposées de manière décalée en hauteur, la pince de retenue (25) formant dans l'ensemble un plan, mais toutefois pas dans l'état monté.

2. Dispositif pour la connexion axiale d'une partie de tube extérieure à une partie d'axe coaxiale ou une partie de tube intérieure venant en prise dans la partie de tube, notamment pour la connexion d'une tubulure d'écoulement (10a) d'un injecteur pour l'injection de carburant dans des chambres de combustion avec un connecteur de retour de carburant (15), deux fentes de retenue (13a, 13b, 14a, 14b) diamétralement opposées et traversant la paroi de la partie de tube extérieure étant pratiquées dans la partie de tube extérieure, auxquelles correspondent des rainure (24) sur la périphérie de la partie d'axe ou de la partie de tube intérieure, et deux bras de retenue élastiques (26, 27) opposés l'un à l'autre d'une pince de retenue (25) en forme d'étrier s'encliquetant élastiquement depuis l'extérieur à travers les fentes de retenue (13a, 13b, 14a, 14b) de la partie de tube extérieure dans les rainures (24) de la partie d'axe ou de la partie de tube intérieure, **caractérisé en ce que** les fentes de retenue (13a, 14a) de la partie de tube (10a), considérées dans la direction axiale, sont disposées parallèlement l'une à l'autre, mais par contre, considérées en vue de côté, sont disposées en dévers l'une par rapport à l'autre, la pince de retenue (25) formant dans l'ensemble un plan, mais toutefois pas dans l'état monté.

3. Dispositif selon la revendication 2, **caractérisé en ce que** les fentes de retenue (13b, 14b) de la partie de tube extérieure (10b), considérées dans la direction axiale, sont disposées parallèlement l'une à l'autre, mais sont toutefois décalées l'une par rapport à l'autre en hauteur.

4. Dispositif selon la revendication 1, 2 ou 3, **caractérisé en ce que** les bras élastiques (26, 27) de la pince de retenue en forme d'étrier (25) s'encliquètent de manière connue en soi dans une rainure annulaire (24) sur la périphérie de la partie d'axe (15) ou de la partie de tube intérieure.

5. Dispositif selon la revendication 1, 2 ou 3, **caractérisé en ce que** deux rainures diamétralement opposées, parallèles et décalées en hauteur l'une par rapport à l'autre, sont pratiquées dans la paroi extérieure (18) de la partie d'axe (15) ou de la partie intérieure, de telle sorte que chaque rainure corresponde à la fente de retenue respective associée physiquement (13, respectivement 14) de la partie de tube extérieure (10).

6. Dispositif selon la revendication 1, 2 ou 3, **caractérisé en ce que** dans la paroi extérieure (18) de la partie d'axe (15) ou de la partie de tube intérieure sont pratiquées deux rainures diamétralement opposées, décalées en hauteur l'une par rapport à l'autre et en dévers l'une par rapport à l'autre, mais toutefois parallèles en vue axiale de dessus, de telle sorte que chaque rainure corresponde à la fente de retenue respective associée physiquement (13, respectivement 14) de la partie de tube extérieure (10).

7. Dispositif selon l'une quelconque ou plusieurs des revendications précédentes, **caractérisé en ce que** la pince de retenue (25) est réalisée de manière connue en soi d'une seule pièce, et se compose de fil métallique à ressort cintré.

8. Dispositif selon la revendication 7, dans lequel les bras de retenue élastiques (26, 27) de la pince de retenue (25) sont d'abord cintrés radialement vers l'intérieur et ensuite divergent à nouveau, **caractérisé en ce que** les extrémités libres des bras de retenue élastiques (26, 27) présentent une forme écartée vers l'extérieur.
